# EUROPEAN PATENT APPLICATION

(11) **EP 4 484 160 A1**
(43) Date of publication of application: **01.01.2025**
(21) Application number: 23382661.9
(22) Date of filing: 28.06.2023
(51) Int. Cl.: B32B 27/08, B32B 27/30, B32B 27/32, C08J 5/18, C08L 23/08

(54) **ENHANCED TOUGHNESS FOR MACHINE DIRECTION ORIENTATION OF POLYETHYLENE FILMS AND THE METHOD THEREOF**

(71) Applicant: Dow Global Technologies LLC, Midland, MI 48674 (US)
(72) Inventor: YEE, Wu Aik, 638025 Singapore (SG); NIETO PALOMO, Jesús, 43006 Tarragona (ES); WANG, Zheng Jie, 638025 Singapore (SG)
(74) Representative: Elzaburu S.L.P.

(57) **Abstract**

According to one or more embodiments described herein, a multilayer film may include a first layer that may include a first polyethylene-based polymer, a core that may include a first core layer that may include a second polyethylene-based polymer, and a second layer that may include a third polyethylene-based polymer. The thickness of the first core layer may be less than 10% of the total thickness of the multilayer film. The second polyethylene-based polymer may be an ethylene-based copolymer selected from the group consisting of ethylene/butyl acrylate copolymer, ethylene/ethyl acrylate copolymer, ethylene/methyl acrylate copolymer, and ethylene/vinyl acetate copolymer. The core may be positioned between the first layer and the second layer. The first polyethylene-based polymer and the third polyethylene-based polymer may have the same composition or different compositions. The multilayer film may be machine direction oriented with a draw ratio of at least 4:1.

## Description

### TECHNICAL FIELD

Embodiments of the present disclosure generally relate to polymeric materials and, in particular, to multilayer films.

### BACKGROUND

Multilayer films that incorporate a variety of materials, including polypropylene, polyamide, and polyethylene terephthalate, are widely used in industrial and consumer products.

### SUMMARY

Multilayer films often are enhanced by having desirable properties such as sufficient puncture resistance-for example, to avoid the film from breakage during the film wrapping process on a pallet, or in food packaging, handling, and transportation. Combination of layers having different materials can allow for good performance of the films, but such multilayer films can be difficult, if not impossible, to recycle together due to the different types of materials that are not recycle-compatible with each other. As demand for sustainable and recyclable materials continues to rise, there remains a need for multilayer films that can be recycled more easily and that may exhibit desirable puncture resistance and/or improved or maintained other properties.

On the other hand, conventional machine direction oriented polyethylene films may have relatively good recyclability, but may suffer from a number of undesired properties, such as relatively poor puncture resistance, asymmetrical performance, and/or poor haze and clarity when compared to other films.

Described herein, according to some embodiments, are machine direction oriented polyethylene films have relatively good puncture resistance. It has been discovered that the addition of a relatively thin core layer, disposed between two polyethylene-based layers, and comprising an ethylene-based copolymer that includes ethyl acrylate, methyl acrylate, butyl acrylate, or vinyl acetate to a multilayer film may impart good tear resistance while maintaining the acceptable recyclability of machine direction oriented polyethylene films.

According to one or more embodiments of the present disclosure, a multilayer film may include a first layer that may include a first polyethylene-based polymer. The multilayer film may also include a core that may include a first core layer that may include a second polyethylene-based polymer. The thickness of the first core layer may be less than 10% of the total thickness of the multilayer film. The second polyethylene-based polymer may be an ethylene-based copolymer selected from the group consisting of ethylene/butyl acrylate copolymer, ethylene/ethyl acrylate copolymer, ethylene/methyl acrylate copolymer, and ethylene/vinyl acetate copolymer. The multilayer film may also include a second layer that may include a third polyethylene-based polymer. The core may be positioned between the first layer and the second layer. The first polyethylene-based polymer and the third polyethylene-based polymer may have the same composition or different compositions. The multilayer film may be machine direction oriented with a draw ratio of at least 4:1.

Additional features and advantages of the present disclosure will be set forth in the detailed description, which follows, and in part will be apparent to those skilled in the art from that description or recognized by practicing the embodiments described herein, including the detailed description, which follows the claims.

### DETAILED DESCRIPTION

Specific embodiments of the present application will now be described. The disclosure may, however, be embodied in different forms and should not be construed as limited to the embodiments set forth in this disclosure. Rather, these embodiments are provided so that this disclosure will be thorough and complete and will fully convey the scope of the subject matter to those skilled in the art.

Generally, described in this disclosure are various embodiments of multilayer films. Such, multilayer films can be used, for example, in packaging applications. The multilayer films may include a first layer comprising a first polyethylene-based polymer, a core comprising a first core layer comprising a second polyethylene-based polymer, and a second layer comprising a third polyethylene-based polymer. The core may be positioned between the first layer and the second layer.

### Definitions

The term "polymer" refers to polymeric compounds prepared by polymerizing monomers, whether of the same or a different type. Accordingly, the generic term polymer includes homopolymers, which are polymers prepared by polymerizing only one monomer, and copolymers, which are polymers prepared by polymerizing two or more different monomers.

The term "interpolymer" refers to polymers prepared by polymerizing at least two different types of monomers. Accordingly, the generic term interpolymer includes copolymers and other polymers prepared by polymerizing more than two different monomers, such as terpolymers.

The terms "polyolefin," "polyolefin polymer," and "polyolefin resin" refer to polymers prepared by polymerizing a simple olefin (also referred to as an alkene, which has the general formula CₙH₂ₙ) monomer. Accordingly, the generic term polyolefin includes polymers prepared by polymerizing ethylene monomer with or without one or more comonomers, such as polyethylene, and polymers prepared by polymerizing propylene monomer with or without one or more comonomers, such as polypropylene.

The terms "polyethylene" and "ethylene-based polymer" refer to polyolefins comprising greater than 50 percent (%) by mole of units that have been derived from ethylene monomer, which includes polyethylene homopolymers and copolymers. Common forms of polyethylene known in the art include Low Density Polyethylene (LDPE), Linear Low Density Polyethylene (LLDPE), Ultra Low Density Polyethylene (ULDPE), Very Low Density Polyethylene (VLDPE), Medium Density Polyethylene (MDPE), and High Density Polyethylene (HDPE).

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599,392, which is hereby incorporated by reference). LDPE resins typically have a density in the range of 0.916 to 0.935 g/cm³.

The term "LLDPE", includes both resin made using the traditional Ziegler-Natta catalyst systems and chromium-based catalyst systems as well as single-site catalysts, including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and includes linear, substantially linear or heterogeneous polyethylene copolymers or homopolymers. LLDPEs contain less long chain branching than LDPEs and include the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm³. "MDPE" is typically made using chromium or Ziegler-Natta catalysts or using single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and typically have a molecular weight distribution ("MWD") greater than 2.5.

The term "HDPE" refers to polyethylenes having densities greater than about 0.935 g/cm³ and up to about 0.980 g/cm³, which are generally prepared with Ziegler-Natta catalysts, chrome catalysts or single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy).

The term "ULDPE" refers to polyethylenes having densities of 0.855 to 0.912 g/cm³, which are generally prepared with Ziegler-Natta catalysts, chrome catalysts, or single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy). ULDPEs include, but are not limited to, polyethylene (ethylene-based) plastomers and polyethylene (ethylene-based) elastomers.

The term "ethylene-based copolymer" refers to copolymers comprising a majority amount (>50 wt.%) of units derived from ethylene monomer and units of at least one different comonomer. Ethylene-based copolymers are ethylene-based polymers as that term is defined below. Examples of ethylene-based copolymers include ethylene/butyl acrylate copolymer (units of ethylene monomer copolymerized with units of butyl acrylate comonomer), ethylene/ethyl acrylate copolymer (units of ethylene monomer copolymerized with units of ethyl acrylate comonomer), ethylene/methyl acrylate copolymer (units of ethylene monomer copolymerized with units of methyl acrylate comonomer), and ethylene/vinyl acetate copolymer (units of ethylene monomer copolymerized with units of vinyl acetate comonomer).

The term "melt flow ratio" refers to a ratio of melt indices of a polymer. Accordingly, the generic term melt flow ratio includes a ratio of a high load melt index (I₂₁) of a polymer to a melt index (I₂) of the polymer, which may also be referred to as an "MFR₂₁."

The term "composition" refers to a mixture of materials that comprises the composition, as well as reaction products and decomposition products formed from the materials of the composition.

The terms "comprising," "including," "having," and their derivatives, are not intended to exclude the presence of any additional component, step, or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step, or procedure, excepting those that are not essential to operability. The term "consisting of" excludes any component, step, or procedure not specifically delineated or listed.

"Multilayer structure" or "multilayer film" means any structure having more than one layer. For example, the multilayer structure (for example, a film) may have two, three, four, five, or more layers. A multilayer structure may be described as having the layers designated with letters. For example, a three layer structure designated as A/B/C may have a core layer, B, and two external layers, A and C. Likewise, a structure having two core layers, B and C, and two external layers, A and D, would be designated A/B/C/D.

### Multilayer Films

Reference will now be made to embodiments of the multilayer films described herein. Embodiments of the presently described multilayer films may include at least three layers.

Multilayer films of the present disclosure may include at least 3 layers and even as many as 11 or more layers. The number of layers in the multilayer film may depend on a number of factors including, for example, the composition of each layer in the multilayer film, the desired properties of the multilayer film, the desired end-use application of the multilayer film, the manufacturing process of the multilayer film, and others. In one or more embodiments the multilayer film may have from 3 layer to 11 layers, such as from 3 layers to 4 layers, from 4 layers to 5 layers, from 5 layers to 6 layers, from 6 layers to 7 layers, from 7 layers to 8 layers, from 8 layers to 9 layers, from 9 layers to 10 layers, from 10 layers to 11 layers, or from any combination of one or more of these endpoints.

In one or more embodiments, the multilayer films of the present disclosure may be machine direction oriented. The multilayer films of the present disclosure may be machine direction oriented with a draw ratio of at least 4:1, at least 5:1, or even at least 6:1.

The multilayer film may be a three-layer structure designated as A/B/C, where the first layer may be designated as A, the first core layer may be designated as B, and the second layer may be designated as C. In some embodiments, one or both of the first layer and the second layer may be referred to as "skin layers" or "outer layers." In embodiments, the first core layer may be positioned between the first layer and the second layer. In further embodiments, the first layer and the second layer may be the outermost layers of the multilayer film. As used herein, the outermost layers of the multilayer film may be understood to mean there may not be another layer deposited over the outermost layer, such that the outermost layer is in direct contact with the surrounding air.

In one or more embodiments, the first core layer and the first layer, the first core layer and second layer, or both may be in direct contact with one another. As used herein, "direct contact" means that there may not be any other layers positioned between the two layers that are in direct contact with one another. In other embodiments, the multilayer film may include one or more additional layers, for example, one or more additional core layers, which may be disposed between the first core layer and the first layer, between the first core layer and the second layer or both.

As described in more detail subsequently in this disclosure, the multilayer films may include a first layer comprising a first polyethylene-based polymer, a first core layer comprising a second polyethylene-based polymer, and a second layer comprising a third polyethylene-based polymer. The first polyethylene-based polymer and the third polyethylene based may be the same or different in composition. It should be understood that any of the foregoing layers can further comprise one or more additives as known to those of skill in the art such as, for example, plasticizers, stabilizers including viscosity stabilizers, hydrolytic stabilizers, primary and secondary antioxidants, ultraviolet light absorbers, anti-static agents, dyes, pigments or other coloring agents, inorganic fillers, fire-retardants, lubricants, reinforcing agents such as glass fiber and flakes, synthetic (for example, aramid) fiber or pulp, foaming or blowing agents, processing aids, slip additives, antiblock agents such as silica or talc, release agents, tackifying resins, or combinations of two or more thereof. Inorganic fillers, such as calcium carbonate, and the like can also be incorporated into one or more of the first layer, the second layer, the third layer, and combinations thereof. In some embodiments, the first layer, the second layer, the third layer, and combinations may each include up to 5 weight percent of such additional additives based on the total weight of the respective layer. All individual values and subranges from 0 wt.% to 5 wt.% are included and disclosed herein; for example, the total amount of additives in the first layer, the second layer, or the third layer can be from 0.5 wt.% to 5 wt.%, from 0.5 wt.% to 4 wt.%, from 0.5 wt.% to 3 wt.%, from 0.5 wt.% to 2 wt.%, from 0.5 wt.% to 1 wt.%, from 1 wt.% to 5 wt.%, from 1 wt.% to 4 wt.%, from 1 wt.% to 3 wt.%, from 1 wt.% to 2 wt.%, from 2 wt.% to 5 wt.%, from 2 wt.% to 4 wt.%, from 2 wt.% to 3 wt.%, from 3 wt.% to 5 wt.%, from 3 wt.% to 4 wt.%, or from 4 wt.% to 5 wt.% based on the total weight of the respective layer. The incorporation of the additives can be carried out by any known process such as, for example, by dry blending, by extruding a mixture of the various constituents, by the conventional masterbatch technique, or the like.

In one or more embodiments, the multilayer films of the present disclosure comprise greater than or equal to 95 wt.% of polyethylene-based polymers, based on the total weight of the multilayer film, such as greater than or equal to 96 wt.%, greater than or equal to 97 wt.%, greater than or equal to 98 wt.%, or even greater than or equal to 99 wt.% of polyethylene based polymers.

The multilayer films of the present disclosure can have a variety of thicknesses. The thickness of the multilayer film may depend on a number of factors including, for example, the number of layers in the multilayer film, the composition of the layers in the multilayer film, the desired properties of the multilayer film, the desired end-use application of the film, the manufacturing process of the multilayer film, and others. In one or more embodiments, the multilayer film may have a thickness of from 10 microns to 250 microns, such as from 10 microns to 20 microns, from 20 microns to 30 microns, from 30 microns to 40 microns, from 40 microns to 50 microns, from 50 microns to 60 microns, from 60 microns to 70 microns, from 70 microns to 80 microns, from 80 microns to 90 microns, from 90 microns to 100 microns, from 100 microns to 110 microns, from 110 microns to 120 microns, from 120 microns to 130 microns, from 130 microns to 140 microns, from 140 microns to 150 microns, from 150 microns to 160 microns, from 160 microns to 170 microns, from 170 microns to 180 microns, from 180 microns to 190 microns, from 190 microns to 200 microns, from 200 microns to 210 microns, from 210 microns to 220 microns, from 220 microns to 230 microns, from 230 microns to 240 microns, from 240 microns to 250 microns, or from any combination of one or more of these ranges.

In one or more embodiments, the multilayer film may have a puncture force of greater than or equal to 10 newton when measured according to the test methods described subsequently in this disclosure, such as greater than or equal to 15 newton, greater than or equal to 20 newton, greater than or equal to 25 newton, or even greater than or equal to 30 newton. In one or more embodiments, the multilayer film may have a puncture force of from 10 newton to 60 newton, such as from 10 newton to 15 newton, from 15 newton to 20 newton, from 20 newton to 25 newton, from 25 newton to 30 newton, from 30 newton to 35 newton, from 35 newton to 40 newton, from 40 newton to 45 newton, from 45 newton to 50 newton, from 50 newton to 55 newton, from 55 newton to 60 newton, or from any combination of one or more of these ranges.

In one or more embodiments, the multilayer film may have a puncture energy of greater than or equal to 0.1 joules when measured according to the test methods described subsequently in this disclosure, such as greater than or equal to 0.2 joules, or even greater than or equal to 0.3 joules. In one or more embodiments, the multilayer film may have a puncture energy of from 0.1 joules to 1 joules, such as from 0.1 joules to 0.2 joules, from 0.2 joules to 0.3 joules, from 0.3 joules to 0.4 joules, from 0.4 joules to 0.5 joules, from 0.5 joules to 0.6 joules, from 0.6 joules to 0.7 joules, from 0.7 joules to 0.8 joules, from 0.8 joules to 0.9 joules, from 0.9 joules to 1.0 joules, or from any combination of one or more of these ranges. Without being bound by theory, it is believed that the addition of a thin functional layer, such as, for example, the first core layer, may improve the puncture energy of the multilayer film when compared to conventional machine direction oriented polyethylene films that do not comprise such a layer.

In one or more embodiments, the multilayer film may have a machine direction tear resistance of greater than or equal to 0.1 newton, such as greater than or equal to 0.2 newton, greater than or equal to 0.3 newton, greater than or equal to 0.4, greater than or equal to 0.5 newton, greater than or equal to 0.6 newton, greater than or equal to 0.7 newton, greater than or equal to 0.8 newton, greater than or equal to 0.9 newton, or even greater than or equal to 1.0 newton. In one or more embodiments, the multilayer film may have a cross direction tear resistance of greater than or equal to 9.0 newton, such as greater than or equal to 10 newton, greater than or equal to 11 newton, or even greater than or equal to 12 newton.

### Core

As stated previously, the presently disclosed multilayer films may include a core. In the multilayer film designated as three-layer structure, A/B/C, the core layer may be designated as B. In one or more embodiments the core may comprise a first core layer. In further embodiments, the core layer may comprise additional core layers, such as a second core layer and a third core layer.

In one or more embodiments, the core comprises a first core layer. The first core layer may comprise a second polyethylene-based polymer. In one or more embodiments, the second polyethylene-based polymer may comprise an ethylene-based copolymer selected from the group consisting of ethylene/butyl acrylate copolymer, ethylene/ethyl acrylate copolymer, ethylene/methyl acrylate copolymer, and ethylene/vinyl acetate copolymer. In some embodiments, the ethylene-based copolymer comprises from 80 to 100 wt.% of the first core layer, based on the total weight of the first core layer. All individual values and subranges of from 80 wt.% to 100 wt.% are disclosed herein. In some embodiments, the ethylene-based copolymer comprises from 85 wt.% to 100 wt.%, from 90 wt.% to 100 wt.%, from 95 wt.% to 100 wt.%, or from 99 wt.% to 100 wt.% of the first core layer, based on the total weight of the first core layer.

Without being bound by theory it is believed that the addition of an ethylene-based copolymer selected from the group consisting of ethylene/butyl acrylate copolymer, ethylene/ethyl acrylate copolymer, ethylene/methyl acrylate copolymer, and ethylene/vinyl acetate copolymer as thin functional layer, such as, for example, the first core layer may negatively impact the miscibility of the first core layer with other polyethylene-based polymer layers of the multilayer film. This may be caused by the more polar groups such as the acrylate and acetate groups of the ethylene-based copolymer. It is believed that this immiscibility may allow for unique interactions at the boundary between the first core layer and the other layers of the multilayer film resulting in improved toughness, and optical properties when compared to conventional polyethylene based films that do not have such layers when the multilayer is machine direction oriented. For example, it is believed that when force is applied to a multilayer film micro-delamination may occur at the boundary the first core layer and the other layers which may result in improved energy absorption, and accordingly improved physical toughness of the multilayer film when compared to conventional polyethylene-based films.

In one or more embodiments, the ethylene-based copolymer of the first core layer has a density of from 0.900 g/cm³ to 0.950 g/cm³. All individual values and subranges of from 0.900 g/cm³ to 0.950 g/cm³ are disclosed and included herein. For example, the ethylene-based copolymer of the first core layer can have a density of from 0.900 g/cm³ to 0.945 g/cm³, from 0.905 g/cm³ to 0.945 g/cm³, from 0.910 g/cm³ to 0.945 g/cm³ or from 0.920 g/cm³ to 0.945 g/cm³.

In one or more embodiments, the ethylene-based copolymer of the first core layer has a melt index (I₂) of less than 5 g/10 min. All individual values and subranges of less than 5 g/10 min are disclosed and included herein. For example, the ethylene-based copolymer can have a melt index (I₂) of less than 5 g/10 min, less than 4 g/10 min, less than 3 g/10 min, less than 2 g/10 min, or less than 1 g/10 min.

In one or more embodiments, the ethylene-based copolymer is ethylene/vinyl acetate copolymer comprising from 9 wt.% to 28 wt.% vinyl acetate comonomer, based on the total weight of the ethylene/vinyl acetate copolymer. All individual values and subranges of from 9 wt.% to 28 wt.% are disclosed and included herein. For examples the ethylene/vinyl acetate copolymer can comprise from 10 to 25 wt.%, from 12 to 23 wt.%, or from 15 to 20 wt.% of vinyl acetate comonomer, based on total weight of the ethylene/vinyl acetate copolymer.

In one or more embodiments, the ethylene-based copolymer is ethylene/butyl acrylate copolymer, ethylene/ethyl acrylate copolymer, or ethylene/methyl acrylate copolymer comprising from 15 wt.% to 30 wt.% acrylate comonomer, based on total weight of the ethylene-based copolymer. All individual values and subranges of from 15 wt.% to 30 wt.% are disclosed and included herein. For example, the ethylene/butyl acrylate copolymer, ethylene/ethyl acrylate copolymer, or ethylene/methyl acrylate copolymer can contain from 15 wt.% to 16 wt.%, from 16 wt.% to 17 wt.%, from 17 wt.% to 18 wt.%, from 18 wt.% to 19 wt.%, from 19 wt.% to 20 wt.%, from 20 wt.% to 21 wt.%, from 21 wt.% to 22 wt.%, from 22 wt.% to 23 wt.%, from 23 wt.% to 24 wt.%, from 25 wt.% to 26 wt.% acrylate comonomer, or from any combination of one or more of these ranges.

Examples of commercially available ethylene-based copolymers selected from the group consisting of ethylene/butyl acrylate copolymer, ethylene/ethyl acrylate copolymer, ethylene/methyl acrylate copolymer, and ethylene/vinyl acetate copolymer that can be used in embodiments of the presently described subject matter include polymers under the name ELVALOY^{™} and ELVAX^{™} commercially available from Dow, Inc.

In one or more embodiments, the thickness of the first core layer may be less than 10% of the total thickness of the multilayer film. In one or more embodiments, the thickness of the first core layer may be less than 9 % of the total thickness of the multilayer film, less than 8 %, less than 7 %, less than 6 %, or even less than 5 % of the total thickness of the multilayer film.

In one or more embodiments, the core may comprise a second core layer and a third core layer. The first core layer may be positioned between the second core layer and the third core layer. The second core layer may comprise a fourth polyethylene-based polymer. The third core layer may comprise a fifth polyethylene-based polymer. In some embodiments the fourth polyethylene-based polymer and the fifth polyethylene-based polymer may have the same composition. In other embodiments, the fourth polyethylene-based polymer and the fifth polyethylene-based polymer may have different compositions.

In one or more embodiments, the fourth polyethylene-based polymer and the fifth polyethylene-based polymer may include one or more of an LLDPE, an HDPE, an MDPE, and an LDPE. In some embodiments, the fourth polyethylene-based polymer and the fifth polyethylene-based polymer may be a blend of polyethylene-based polymers.

In one or more embodiments, the fourth polyethylene-based polymer and the fifth polyethylene-based polymer may have a density of less than or equal to 0.952 g/cm³. The fourth polyethylene-based polymer and the fifth polyethylene based polymer may have a density of from 0.920 g/cm³ to 0.952 g/cm³, such as from 0.920 g/cm³ to 0.925 g/cm³, from 0.925 g/cm³ to 0.930 g/cm³, from 0.930 g/cm³ to 0.935 g/cm³, from 0.935 g/cm³ to 0.940 g/cm³, from 0.940 g/cm³ to 0.945 g/cm³, from 0.945 g/cm³ to 0.950 g/cm³, from 0.950 g/cm³ to 0.952 g/cm³, or any combination of one or more of these endpoints.

In one or more embodiments, the fourth polyethylene-based polymer and the fifth polyethylene-based polymer may have a melt index (I₂) of less than or equal to 7.5 g/10 min. The fourth polyethylene-based polymer and the fifth polyethylene-based polymer may have a melt index of from 0.3 g/10 min to 7.5 g/10 min, such as from 0.3 g/10 min to 0.5 g/10 min, from 0.5 g/10 min to 1.0 g/10 min, from 1.0 g/10 min to 1.5 g/10 min, from 1.5 g/10 min to 2.0 g/10 min, from 2.0 g/10 min to 2.5 g/10 min, from 2.5 g/10 min to 3.0 g/10 min, from 3.0 g/10 min to 3.5 g/10 min, from 3.5 g/10 min to 4.0 g/10 min, from 4.0 g/10 min to 4.5 g/10 min, from 4.5 g/10 min to 5.0 g/10 min, from 5.0 g/10 min to 5.5 g/10 min, from 5.5 g/10 min to 6.0 g/10 min, from 6.0 g/10 min to 6.5 g/10 min, from 6.5 g/10 min to 7.0 g/10 min, from 7.0 g/10 min to 7.5 g/10 min, or from any combination of one or more of these ranges.

Commercially available examples of polyethylene-based polymers that may be used as the fourth and fifth polyethylene based polymers include those commercially available from Dow, Inc. under the name ELITE^{™} and INNATE^{™} including, for example, ELITE^{™} 5538G and INNATE^{™} ST70 and those commercially available from the ExxonMobil Chemical Company under the name EXCEED^{™} and ENABLE^{™} including, for example, EXCEED^{™} 1018MA, ENABLE^{™} 3505MC, EXCEED^{™} XP 8318MJ, and EXCEED^{™} S 9272ML.

### First Layer and Second Layer of the Multilayer Film

The first layer and second layer of the multilayer film are not particularly limited. In one or more embodiments, the first layer and second layer may have the same polymer composition or may have different polymer compositions. In one or more embodiments, the first layer may comprise a first polyethylene-based polymer and the second layer may comprise a third polyethylene-based polymer.

In one or more embodiments, the first polyethylene-based polymer and the third polyethylene based polymer may include one or more of an LLDPE, an HDPE, an MDPE, and an LDPE.

In one or more embodiments, one or both of the first polyethylene-based polymer and the third polyethylene-based polymer may have a density of from 0.925 g/cm³ to 0.970 g/cm³, such as from 0.925 g/cm³ to 0.930 g/cm³, from 0.930 g/cm³ to 0.935 g/cm³, from 0.935 g/cm³ to 0.940 g/cm³, from 0.940 g/cm³ to 0.945 g/cm³, from 0.945 g/cm³ to 0.950 g/cm³, from 0.950 g/cm³ to 0.955 g/cm³, from 0.955 g/cm³ to 0.960 g/cm³, from 0.960 g/cm³ to 0.965 g/cm³, from 0.965 g/cm³ to 0.970 g/cm³, from 0.970 g/cm³ to 0.975 g/cm³, or from any combination of one or more of these ranges.

In one or more embodiments, one or both of the first polyethylene-based polymer and the third polyethylene-based polymer may have a melt index (I₂) of from 0.3 g/10 min to 7.0 g/10 min, such as from 0.3 g/10 min to 0.5 g/10 min, from 0.5 g/10 min to 1.0 g/10 min, from 1.0 g/10 min to 1.5 g/10 min, from 1.5 g/10 min to 2.0 g/10 min, from 2.0 g/10 min to 2.5 g/10 min, from 2.5 g/10 min to 3.0 g/10 min, from 3.0 g/10 min to 3.5 g/10 min, from 3.5 g/10 min to 4.0 g/10 min, from 4.0 g/10 min to 4.5 g/10 min, from 4.5 g/10 min to 5.0 g/10 min, from 5.0 g/10 min to 5.5 g/10 min, from 5.5 g/10 min to 6.0 g/10 min, from 6.0 g/10 min to 6.5 g/10 min, from 6.5 g/10 min to 7.0 g/10 min, or from any combination of one or more of these ranges.

Commercially available examples of polyethylene-based polymers that may be used as the first or third polyethylene-based polymers include those commercially available from Dow, Inc. under the name ELITE^{™} including, for example, ELITE^{™} 5960G1 and those commercially available from the ExxonMobil Chemical Company including, for example, EXXONMOBIL^{™} High Density Polyethylene HTA 108.

### TEST METHODS

### Density

Density was measured in accordance with ASTM D792, and expressed in grams/cm³ (g/cm³ or g/cc).

### Melt Index (I₂)

Melt index (I₂) was measured in accordance with ASTM D-1238 at 190°C at 2.16 kg. The values for melt indices are reported in g/10 min, which corresponds to grams eluted per 10 minutes.

### Tensile Strength

Tensile strength was measured in accordance with ASTM D-882, and expressed in megapascals (MPa).

### Tensile Modulus of Elasticity

Tensile modulus of elasticity was measured in accordance with ASTM D-882, and expressed in megapascals (MPa)

### Elmendorf Tear Resistance

Elmendorf tear resistance was measured in accordance with ASTM D-1922, and expressed in newton (N).

### Puncture Resistance

Puncture resistance was measured on a ZWICK model Z010 with TestXpertll software. The specimen size is 6" x 6" and at least 5 measurements are made to determine an average puncture value. A 1000 Newton load cell is used with a round specimen holder. The specimen is a 4 inch diameter circular specimen. The Puncture resistance procedures follow ASTM D5748-95 standard, with modification to the probe described here. The puncture probe is a ½ inch diameter ball shaped polished stainless steel probe. There is no gauge length; the probe is as close as possible to, but not touching, the specimen. The probe is set by raising the probe until it touched the specimen. Then the probe is gradually lowered, until it is not touching the specimen. Then the crosshead is set at zero. Considering the maximum travel distance, the distance would be approximately 0.10 inch. The crosshead speed used is 250 mm/minute. The thickness is measured in the middle of the specimen. The thickness of the film, the distance the crosshead traveled, and the peak load are used to determine the puncture by the software. The puncture probe is cleaned after each specimen. The puncture energy is the area under the curve of the load/elongation curve (in Joules).

### Haze

Haze was measured in accordance with ASTM D1003, and expressed in a percent

### Clarity

Clarity was measured in accordance with ASTM D1003, and expressed in a percent

### EXAMPLES

The following examples illustrate features of the present disclosure but are not intended to limit the scope of the disclosure.

The raw materials shown in Table 1 were used to prepare the Inventive Films and Comparative Films discussed below. Each of the resins are commercially available from Dow, Inc. unless noted otherwise.

**Table 1**

| **Commercial Name** | **Type** | **I₂ (g/10 min)** | **Densit y (g/cc)** |
|---|---|---|---|
| ELITE^{™} 5960G1 | Ethylene-based polymer | 0.85 | 0.962 |
| ELITE^{™} 5538G | Ethylene-based polymer | 1.3 | 0.941 |
| ELITE^{™} 5400G | Ethylene-based polymer | 1.0 | 0.916 |
| INNATE^{™} ST70 | Ethylene-based polymer | 0.85 | 0.926 |
| ELVALOY^{™} AC 3117 | Ethylene/butyl acrylate copolymer (17 wt.% butyl acrylate) | 1.5 | 0.924 |

Multilayer films were formed using the materials listed in the above table. The Multilayer films were produced using a Dr. Collin 5-layer co-extrusion blown film line. The Extruder size was 25 mm for extruders A, B, and D and was 30 mm for extruder C. The order of the extruders was A:B:C:B:D. The die gap was 1.8 mm. The maximum line speed was 30 meters/minute. Gravimetric Feeders were used. The maximum output was 25 kg/hr for LLDPE. 5-layer coextruded films were casted at a thickness of 120 microns, 100 microns and 20 microns. Table 2 shows the composition of the comparative film, while Table 3 shows the composition of the inventive film. The 120 micron and the 100 micron thick films subsequently underwent a machine direction orienting process to reach a thickness of 20 microns. Tables 4 and 5 show the temperature profile of the extruders and the specifics of the machine direction orienting process for the comparative film of Table 2, respectively. For the comparative film, the 120 micron thick film had a take off speed of 3.0 m/min, the 100 micron thick film had a take off speed of 3.4 m/min, and the 20 micron thick film had a take off speed of 15.3 m/min. Tables 6 and 7 show the temperature profile of the extruders and the specifics of the machine direction orienting process for the inventive film of Table 3, respectively. For the inventive film, the 120 micron thick film had a take off speed of 2.8 m/min, the 100 micron thick film had a take off speed of 4.4 m/min, and the 20 micron thick film had a take off speed of 21.7 m/min.

**Table 2**

| **Layer** | **Material** | **Thickness (µm)** | **Density (g/cm³)** | **Melt Index (I₂)** |
|---|---|---|---|---|
| A | ELITE^{™} 5960G1 | 15 | 0.962 | 0.85 |
| B | ELITE^{™} 5538G + INNATE^{™} ST70 20% | 30 | 0.9388 | 1.21 |
| C | ELITE^{™} 5400G | 30 | 0.916 | 1 |
| B | ELITE^{™} 5538G + INNATE^{™} ST70 20% | 30 | 0.9388 | 1.21 |
| D | ELITE^{™} 5960G1 | 15 | 0.962 | 0.85 |

**Table 3**

| **Layer** | **Material** | **Thickness (µm)** | **Density (g/cm³)** | **Melt Index (I₂)** |
|---|---|---|---|---|
| A | ELITE^{™} 5960G1 | 15 | 0.962 | 0.85 |
| B | ELITE^{™} 5538G + INNATE^{™} ST70 20% | 40.5 | 0.9388 | 1.21 |
| C | ELVALOY^{™} 3117 | 9 | 0.924 | 1.5 |
| B | ELITE^{™} 5538G + INNATE^{™} ST70 20% | 40.5 | 0.9388 | 1.21 |
| D | ELITE^{™} 5960G1 | 15 | 0.962 | 0.85 |

**Table 4**

| Extruder | A | B | C | D | Die |
|---|---|---|---|---|---|
| Zone | Temperature, °C | | | | |
| 1 | 30 | 30 | 30 | 30 | 240 |
| 2 | 240 | 210 | 180 | 240 | 240 |
| 3 | 260 | 230 | 210 | 240 | 240 |
| 4 | 260 | 240 | 220 | 240 | 240 |
| 5 | 240 | 240 | 220 | 240 | 240 |
| 6 | 230 | 240 | 230 | 230 | 240 |
| 7 | 230 | 240 | 230 | 230 | 240 |
| | | | | | |
| Melt Temperature, °C | 217 | 235 | 202 | 230 | |
| Melt Pressure, Bar | 77 | 158 | 139 | 101 | |

**Table 5**

| | Temperature, °C | Speed, m/min | |
|---|---|---|---|
| Input | ambient | MDO 5X (100 micron film) | MDO 6X (120 micron film) |
| Group 1 | 85 | 2.29 | 2.29 |
| Group 2 | 90 | 2.29 | 2.29 |
| Group 3 | 100 | 2.29 | 2.29 |
| Group 4 | 75 | 12.13 | 14.42 |
| Group 5 | 65 | 12.13 | 14.42 |
| Group 6 | 45 | 12.13 | 14.42 |
| Group 7 | 20 | 12.13 | 14.42 |

**Table 6**

| Extruder | A | B | C | D | Die |
|---|---|---|---|---|---|
| Zone | Temperature, °C | | | | |
| 1 | 30 | 30 | 30 | 30 | 255 |
| 2 | 200 | 210 | 190 | 200 | 245 |
| 3 | 220 | 230 | 210 | 220 | 240 |
| 4 | 220 | 240 | 220 | 220 | 240 |
| 5 | 220 | 240 | 220 | 220 | 240 |
| 6 | 230 | 240 | 230 | 230 | 240 |
| 7 | 230 | 240 | 230 | 230 | 240 |
| | | | | | |
| Melt Temperature, °C | 203 | 241 | 200 | 212 | |
| Melt Pressure, Bar | 89 | 224 | 138 | 116 | |

**Table 7**

| | Temperature, °C | Speed, m/min | |
|---|---|---|---|
| Input | ambient | MDO 5X (100 micron film) | MDO 6X (120 micron film) |
| Group 1 | 85 | 2.29 | 2.29 |
| Group 2 | 90 | 2.29 | 2.29 |
| Group 3 | 100 | 2.29 | 2.29 |
| Group 4 | 75 | 12.13 | 14.42 |
| Group 5 | 65 | 12.13 | 14.42 |
| Group 6 | 45 | 12.13 | 14.42 |
| Group 7 | 20 | 12.13 | 14.42 |

Now referring to Tables 8, 9, and 10, various physical properties of the blown film (20 micron), the 5X orientation film (100 micron), and the 6X orientation film (120 micron) were tested and recorded in Tables 8, 9, and 10 respectively.

**Table 8**

| 20 micron Film | Comparative Film | Inventive Film |
|---|---|---|
| Tensile Strength Machine Direction (MD), MPa | 45.4 | 43.5 |
| Tensile Strength Cross Direction (TD), MPa | 34.2 | 36.4 |
| 2% Secant Modulus (MD), MPa | 466.3 | 423.6 |
| 2% Secant Modulus (TD), MPa | 453.9 | 464.1 |
| Puncture Energy, J | 0.96 | 1.02 |
| Puncture Force, N | 24.34 | 24.63 |
| Elmendorf Tear (MD), N | 0.42 | 0.39 |
| Elmendorf Tear (TD), N | 4.27 | 5.19 |

**Table 9**

| 100 micron Film (5X) | Comparative Film | Inventive Film |
|---|---|---|
| Tensile Strength Machine Direction (MD), MPa | 141.5 | 149.3 |
| Tensile Strength Cross Direction (TD), MPa | 27.7 | 27 |
| 2% Secant Modulus (MD), MPa | 1261.4 | 1167.7 |
| 2% Secant Modulus (TD), MPa | 1052.1 | 967.7 |
| Puncture Energy, J | 0.112 | 1.02 |
| Puncture Force, N | 14.168 | 24.63 |
| Elmendorf Tear (MD), N | 0.37 | 0.82 |
| Elmendorf Tear (TD), N | 1.94 | 9.58 |

**Table 10**

| 120 micron Film (6X) | Comparative Film | Inventive Film |
|---|---|---|
| Tensile Strength Machine Direction (MD), MPa | 190 | 192.1 |
| Tensile Strength Cross Direction (TD), MPa | 28.6 | 29.2 |
| 2% Secant Modulus (MD), MPa | 1474.1 | 1342.8 |
| 2% Secant Modulus (TD), MPa | 1110 | 996.9 |
| Puncture Energy, J | 0.102 | .623 |
| Puncture Force, N | 11.202 | 45.844 |
| Elmendorf Tear (MD), N | 0.25 | 0.85 |
| Elmendorf Tear (TD), N | 1.37 | 9.86 |

As shown in Tables 8, 9, and 10, increasing orientation of both the comparative film and the inventive film had expected impacts on the tensile strength in both directions and on the 2% secant modulus in both directions. However, the addition of a thin functional layer in the inventive film significantly improved both the puncture energy and the puncture force of the film with increasing orientation when compared to the comparative film This result was unexpected, because increasing orientation typically reduces the puncture energy of a film. However, with increasing orientation, the inventive film had an increase in puncture energy from 5X orientation to 6X orientation. This result is significant as it directly contradicts the expected results shown by the comparative film of decreasing puncture energy with increasing orientation.

Looking at the Elmendorf tear resistance in both the MD and TD directions the addition of a thin functional layer had a strong influence on improving tear performance in both directions. It is known that typically with increasing orientation Elmendorf tear resistance in the MD direction will be reduced. However, the addition of a thin functional layer led to an increase in the tear resistance in the MD direction at both 5X and 6X orientation, when compared to the comparative film.

Now referring to Table 11, the haze and clarity of the films were tested and the results were recorded in Table 11 below.

**Table 11**

| | 20 micron film | | 100 micron film (5X) | | 120 micron film (6X) | |
|---|---|---|---|---|---|---|
| | Haze | Clarity | Haze | Clarity | Haze | Clarity |
| Comparative Film | 18.08 | 95.06 | 11.12 | 95.9 | 8.50 | 96.8 |
| Inventive Film | 18.22 | 92.08 | 5.75 | 98.34 | 4.25 | 98.64 |

As shown in Table 11, with increasing orientation the inventive film had significantly improved clarity and haze when compared to the comparative film.

According to a first aspect of the present disclosure a multilayer film may comprise a a first layer that may comprise a first polyethylene-based polymer. The multilayer film may also comprise a core that may comprise a first core layer that may comprise a second polyethylene-based polymer. The thickness of the first core layer may be less than 10% of the total thickness of the multilayer film. The second polyethylene-based polymer may be an ethylene-based copolymer selected from the group consisting of ethylene/butyl acrylate copolymer, ethylene/ethyl acrylate copolymer, ethylene/methyl acrylate copolymer, and ethylene/vinyl acetate copolymer. The multilayer film may also comprise a second layer that may comprise a third polyethylene-based polymer. The core may be positioned between the first layer and the second layer. The first polyethylene-based polymer and the third polyethylene-based polymer may have the same composition or different compositions. The multilayer film may be machine direction oriented with a draw ratio of at least 4:1.

A second aspect of the present disclosure may include the first aspect where the ethylene-based copolymer comprises from 80 wt.% to 100 wt.% of the first core layer based on the total weight of the first core layer.

A third aspect may include any previous aspect or combination of aspects, where the ethylene-based copolymer is an ethylene/butyl acrylate copolymer, an ethylene/ethyl acrylate copolymer, or an ethylene/methyl acrylate copolymer comprising from 15 wt.% to 30 wt.% acrylate comonomer, based on the total weight of the ethylene-based copolymer.

A fourth aspect may include any previous aspect or combination of aspects, where the ethylene-based copolymer is an ethylene/butyl acrylate copolymer comprising from 15 wt.% to 30 wt.% butyl acrylate comonomer based on the total weight of the ethylene-based copolymer.

A fifth aspect may include any previous aspect or combination of aspects, where the ethylene-based copolymer has a density of from 0.900 g/cm³ to 0.950 g/cm³ and a melt index (I₂) of less than or equal to 5 g/10 min.

A sixth aspect may include any previous aspect or combination of aspects, where the first polyethylene-based polymer and the third polyethylene-based polymer each have a density of from 0.925 g/cm³ to 0.970 g/cm³ and a melt index (I₂) of from 0.3 g/10 min to 7.0 g/10 min.

A seventh aspect may include any previous aspect or combination of aspects, where the thickness of the first core layer is less than 8% of the total thickness of the multilayer film.

An eighth aspect may include any previous aspect or combination of aspects, where the draw ratio is at least 5:1.

A ninth aspect may include any previous aspect or combination of aspects, where the multilayer film has from 3 layers to 11 layers in total.

A tenth aspect may include any previous aspect or combination of aspects, where the core further comprises a second core layer comprising a fourth polyethylene-based polymer and a third core layer comprising a fifth polyethylene-based polymer, where the first core layer is positioned between the second core layer and the third core layer.

An eleventh aspect may include the tenth aspect, where the fourth polyethylene-based polymer and the fifth polyethylene-based polymer each have a density of less than or equal to 0.952 g/cm³ and a melt index (I₂) of less than or equal to 7.5 g/10 min.

A twelfth aspect may include any previous aspect or combination of aspects, where the multilayer film has a puncture force of greater than or equal to 30 newton and a puncture energy of greater than or equal to 0.3 joules.

A thirteenth aspect may include any previous aspect or combination of aspects, where the multilayer film comprises greater than 95 wt.% polyethylene-based polymers, based on the total weight of the multilayer film.

A fourteenth aspect may include any previous aspect or combination of aspects, where wherein the multilayer film has a machine direction tear resistance of greater than or equal to 0.5 newton.

A fifteenth aspect may include any previous aspect or combination of aspects, where the multilayer film has a cross direction tear resistance of greater than or equal to 9.0 newton.

It will be apparent to those skilled in the art that various modifications and variations can be made to the presently disclosed technology without departing from the spirit and scope of the technology. Since modifications combinations, sub-combinations and variations of the disclosed embodiments incorporating the spirit and substance of the presently disclosed technology may occur to persons skilled in the art, the technology should be construed to include everything within the scope of the appended claims and their equivalents. Additionally, although some aspects of the present disclosure may be identified herein as preferred or particularly advantageous, it is contemplated that the present disclosure is not limited to these aspects.

It is noted that the various details described in this disclosure should not be taken to imply that these details relate to elements that are essential components of the various embodiments described in this disclosure, even in cases where a particular element is illustrated in each of the drawings that accompany the present description. Unless specifically identified as such, no feature disclosed and described herein should be construed as "essential". Contemplated embodiments of the present technology include those that include some or all of the features of the appended claims.

For the purposes of describing and defining the present disclosure it is noted that the term "about" are utilized in this disclosure to represent the inherent degree of uncertainty that may be attributed to any quantitative comparison, value, measurement, or other representation. The term "about" are also utilized in this disclosure to represent the degree by which a quantitative representation may vary from a stated reference without resulting in a change in the basic function of the subject matter at issue.

It is noted that one or more of the following claims and the detailed description utilize the terms "where" or "wherein" as a transitional phrase. For the purposes of defining the present technology, it is noted that this term is introduced in the claims as an open-ended transitional phrase that is used to introduce a recitation of a series of characteristics of the structure and should be interpreted in like manner as the more commonly used open-ended preamble term "comprising."

It should be understood that any two quantitative values assigned to a property may constitute a range of that property, and all combinations of ranges formed from all stated quantitative values of a given property are contemplated in this disclosure. Where multiple ranges for a quantitative value are provided, these ranges may be combined to form a broader range, which is contemplated in the embodiments described herein.

## Claims

1. A multilayer film comprising:
a first layer comprising a first polyethylene-based polymer;
a core comprising a first core layer comprising a second polyethylene-based polymer, wherein the thickness of the first core layer is less than 10% of the total thickness of the multilayer film, and wherein the second polyethylene-based polymer is an ethylene-based copolymer selected from the group consisting of ethylene/butyl acrylate copolymer, ethylene/ethyl acrylate copolymer, ethylene/methyl acrylate copolymer, and ethylene/vinyl acetate copolymer; and
a second layer comprising a third polyethylene-based polymer, wherein the core is positioned between the first layer and the second layer, and wherein the first polyethylene-based polymer and the third polyethylene-based polymer have the same composition or different compositions; and
wherein the multilayer film is machine direction oriented with a draw ratio of at least 4:1.

2. The multilayer film of claim 1, wherein the ethylene-based copolymer comprises from 80 wt.% to 100 wt.% of the first core layer based on the total weight of the first core layer.

3. The multilayer film of any preceding claim, wherein the ethylene-based copolymer is an ethylene/butyl acrylate copolymer, an ethylene/ethyl acrylate copolymer, or an ethylene/methyl acrylate copolymer comprising from 15 wt.% to 30 wt.% acrylate comonomer, based on the total weight of the ethylene-based copolymer.

4. The multilayer film of any preceding claim, wherein the ethylene-based copolymer is an ethylene/butyl acrylate copolymer comprising from 15 wt.% to 30 wt.% butyl acrylate comonomer based on the total weight of the ethylene-based copolymer.

5. The multilayer film of any preceding claim, wherein the ethylene-based copolymer has a density of from 0.900 g/cm³ to 0.950 g/cm³ and a melt index (I₂) of less than or equal to 5 g/10 min.

6. The multilayer film of any preceding claim, wherein the first polyethylene-based polymer and the third polyethylene-based polymer each have a density of from 0.925 g/cm³ to 0.970 g/cm³ and a melt index (I₂) of from 0.3 g/10 min to 7.0 g/10 min.

7. The multilayer film of any preceding claim, wherein the thickness of the first core layer is less than 8% of the total thickness of the multilayer film.

8. The multilayer film of any preceding claim, wherein the draw ratio is at least 5:1.

9. The multilayer film of any preceding claim, wherein the multilayer film has from 3 layers to 11 layers in total.

10. The multilayer film of any preceding claim, wherein the core further comprises:
a second core layer comprising a fourth polyethylene-based polymer; and
a third core layer comprising a fifth polyethylene-based polymer, wherein the first core layer is positioned between the second core layer and the third core layer.

11. The multilayer film of claim 10, wherein the fourth polyethylene-based polymer and the fifth polyethylene-based polymer each have a density of less than or equal to 0.952 g/cm³ and a melt index (I₂) of less than or equal to 7.5 g/10 min.

12. The multilayer film of any preceding claim, wherein the multilayer film has a puncture force of greater than or equal to 30 newton and a puncture energy of greater than or equal to 0.3 joules.

13. The multilayer film of any preceding claim, wherein the multilayer film comprises greater than 95 wt.% polyethylene-based polymers, based on the total weight of the multilayer film.

14. The multilayer film of any preceding claim, wherein the multilayer film has a machine direction tear resistance of greater than or equal to 0.5 newton.

15. The multilayer film of any preceding, wherein the multilayer film has a cross direction tear resistance of greater than or equal to 9.0 newton.
